# EUROPEAN PATENT APPLICATION

(11) **EP 3 352 122 A1**
(43) Date of publication of application: **25.07.2018**
(21) Application number: 16846787.6
(22) Date of filing: 06.09.2016
(51) Int. Cl.: G06Q 30/00, G06Q 30/06, G06K 17/00, G06Q 50/10

(54) **ONLINE CERTIFICATION MARK PUBLICATION SYSTEM**

(30) Priority: 17.09.2015 KR 20150131684
(71) Applicant: Yang, Joon Young, Gwangmyeong-si, Gyeonggi-do 14248 (KR)
(72) Inventor: Yang, Joon Young, Gwangmyeong-si, Gyeonggi-do 14248 (KR)
(74) Representative: Zardi, Marco
(86) International application number: PCT/KR2016/009978
(87) International publication number: WO 2017/047966

(57) **Abstract**

Disclosed herein is an online certification mark publication system. The online certification mark publication system includes: a certification mark registration unit configured to register and store a certification mark; an object construction unit configured to accept a registration of an object from a publisher terminal, to also accept a registration of a certification mark assigned to the registered object, and to set hierarchy between registered objects; a module generation unit configured to generate a certification mark module; and a module request processing unit configured to, when a request for a certification mark is received from the certification mark module inserted into the online page, transmit the certification mark of the published object and information about an inheritable certification mark in response to the request, wherein the certification mark is inherited based on the hierarchy between the objects.

## Description

### Technical Field

The present invention relates to an online certification mark publication system which publishes a certification mark issued by an issuance server on an online page, such as a webpage or the like, on which an object is published and which verifies that the published certification mark has been issued to the online object.

Furthermore, the present invention relates to an online certification mark publication system which sets the hierarchy between a plurality of online objects published on an online page and which enables a certification mark to be inherited based on the set hierarchy and also enables the inherited certification mark to be published on the online page.

### Background Art

Generally, users obtain certification from external organizations for the purpose of use for external advertisement, for a legal reason, or for the like. Certification includes various types of certification, such as quality certification, qualification certification, membership certification, affiliation certification, etc. Additionally, certification is present in various forms, such as certification for a pass in a test of an organization, certification for permission, certification for a member of a specific group, certification for the winning of a prize in a contest, the recommendation of an authority, an examination result, an advertisement review result, etc.

Furthermore, certification is issued to a product, a service, or a company or individual which provides a product or service. Furthermore, when products or services are different but are of the same type or of similar types and form a single group, the same certification is assigned to all the products or services within the corresponding group. In the same manner, when companies or individuals form a group or a detailed group is present within a single company, the corresponding group may be a single certification target.

Meanwhile, a certification organization certifies a certification target, and issues a certificate or the like capable of indicating the certification. The certification organization may be an individual, a company, an organization, a government, or a group thereof.

Furthermore, the certificate or the like is an official document which is an evidence for the obtainment of certification, such as a certificate, a warrant, a license, a membership card, or the like. The certificate or the like may be present in the form of a paper document, an electronic document, a certification mark, text, or the like.

By receiving external certification, a user can verify the excellence of himself or herself or his or her product or service and can advertise it externally, and thus the user attempts to obtain credible certification. When certification is obtained from a certification organization, the user places the certificate in an office or the like, or posts it on a homepage, an advertisement, or a product description in text format, image file format, or the like.

In particular, certification is displayed offline by attaching a certification mark to a product, goods, or a service space. However, in spite of many efforts to promote the advantages of certification, a problem arises in that many consumers do not fully understand the details of each certification due to the proliferation of various certification systems. For this purpose, an electronic certification mark technology for attaching an electronic tag to a certification mark is proposed offline [see Patent document 1]. Furthermore, a certification mark can be imitated, and thus a technology for protecting a certification mark for distribution by means of a protection medium is also proposed [see Patent document 2].

Furthermore, a third party who sells a user's product on the Internet, such as an online open market, promotes the product by means of an advertizing material made by the user by including a certificate or certification mark image or by means of a certificate or certification mark image [see Patent document 3].

However, the details, validity, and counterfeiting of online certification marks need to be verified, like those of offline certification marks. Generally, for this purpose, the validity and certification-related details of a certificate published online can be checked by referring to a certification organization having issued the certificate by reference to a published certificate image or description.

Furthermore, in order to verify the credibility of a certificate, an issuance organization must be checked for credibility. It may be possible to directly check the issuance organization itself for credibility, or to check credibility based on the certification of a higher certification organization (a government or the like) or an external organization (a media organization, an international organization, a well-known person, or the like).

There are cases where an issuance organization posts the logos and links of one or more higher or related organizations on a website. However, in order to verify this, a problem arises in that it is necessary to visit each of the higher or related organizations and verify it through a search or the like. Furthermore, when a result cannot be accurately determined, it is difficult to determine whether the issuance organization is trustworthy or not, and time and cost are required due to a phone call or visit to each of the organizations.

For example, a seller may post a health function certification mark, obtained from a certification organization without credibility, on a product sales page. In other words, an issuance organization which issued the health function certification mark of a corresponding product may not be an organization certified by a higher organization, such as the government, or related organization. However, a consumer may be misled by the certification mark, may mistake a product as a product for which a health function has been officially certified, and may then purchase the product. Even when the organization is not an issuance organization certified by a credible organization, it appears to be credible, and thus damage may be caused.

When a third party selling a product is promoting using a certificate at a shopping mall or other website, damage may be caused because official sales qualification, the certification of a corresponding product, or the certification of a corresponding company is not verified.

Furthermore, a problem arises in that there are cases where it is impossible to verify certification due to the mismanagement, absence or closing of the website of an issuance organization. Furthermore, a change to a certificate (such as a change in validity, a change to a certification mark, a change in the name of an organization, or the like) is not immediately transferred, and thus confusion may be caused.

### <Patent Documents>

(Patent document 1) [Patent document 1] Korean Patent Application Publication No. 10-2009-0122852 (published on December 1, 2009)
(Patent document 2) [Patent document 2] Korean Patent Application Publication No. 10-2009-0058473 (published on June 9, 2009)
(Patent document 3) [Patent document 3] Korean Patent Application Publication No. 10-2011-0012687 (published on February 9, 2011)

### Disclosure

### Technical Problem

The present invention has been conceived to overcome the above-described problems, and an object of the present invention is to provide an online certification mark publication system which publishes a certification mark issued by an issuance server on an online page, such as a webpage or the like, on which an object is published and which verifies that the published certification mark has been issued to the online object.

Another object of the present invention is to provide an online certification mark publication system which sets the hierarchy between a plurality of online objects published on an online page and which enables a certification mark to be inherited based on the set hierarchy and also enables the inherited certification mark to be published on the online page.

### Technical Solution

In order to accomplish the above objects, the present invention provides an online certification mark publication system, the online certification mark publication system connecting to a publisher terminal over a network, the online certification mark publication system including: a certification mark registration unit configured to register and store a certification mark; an object construction unit configured to accept a registration of an object from the publisher terminal, to also accept a registration of a certification mark assigned to the registered object, and to set hierarchy between registered objects; a module generation unit configured to generate a certification mark module which can be inserted into an online page on which the object is published, wherein the certification mark module displays the certification mark, assigned to the published object, within the online page; and a module request processing unit configured to, when a request for a certification mark is received from the certification mark module inserted into the online page, transmit the certification mark of the published object and information about an inheritable certification mark in response to the request, wherein the certification mark is inherited based on the hierarchy between the objects.

In the online certification mark publication system of the present invention, the relationships between all the objects for which the hierarchy is set may be configured to have directionality in a single direction.

In the online certification mark publication system of the present invention, each of the objects for which the hierarchy is set may inherit a certification mark from the higher object thereof, and may also inherit a certification mark inherited by the higher object.

In the online certification mark publication system of the present invention, the certification mark module may be inserted into the online page, a predetermined size display space of the online page may be allocated, and the details of the certification mark may be displayed on the corresponding display space.

In the online certification mark publication system of the present invention, when a plurality of certification marks is received in response to the request, the certification mark module may sequentially display the details of the plurality of certification mark on the online page.

In the online certification mark publication system of the present invention, the certification mark module may display the object published on the online page and information about a higher object of the published object, as well as the details of the certification mark.

The online certification mark publication system of the present invention may further include a certification mark guide unit configured to provide an online page which provides a description of the certification mark; the certification mark module may provide a link from the online page on which it is published to the online page which is provided by the certification mark guide unit.

In the online certification mark publication system of the present invention, the certification mark guide unit may publish the description of the certification mark and a description of an issuance organization issuing the corresponding certification mark, and may perform the publication by inserting a certification mark module for a certification mark assigned to the issuance organization.

In the online certification mark publication system of the present invention, the object may be a target to which certification is assigned, and may include any one or more of a product, a service, an individual, a company, an organization, and a group thereof.

In the online certification mark publication system of the present invention, the online page may be any one or more of a webpage, a social network system (SNS), a blog, a messenger, a mail, and a mobile app page.

### Advantageous Effects

As described above, in accordance with the online certification mark publication system according to the present invention, a certification network is constructed around a certification mark, thereby achieving the effect of enabling a third party to immediately and reliably check the certification mark and the validity thereof and also enabling the third party to share the information, publish the information at an outside site in a re-distribution manner, and obtain the verification thereof according to the authority thereof.

### Description of Drawings

FIG. 1 is a block diagram showing the configuration of an overall system for the practice of the present invention;
FIGS. 2 and 3 are views illustrating examples of the configuration of objects according to an embodiment of the present invention;
FIG. 4 a view illustrating an example of an online page on which a certification mark module according to an embodiment of the present invention is published;
FIG. 5 is a block diagram showing the configuration of a certification mark module according to an embodiment of the present invention;
FIG. 6 is a block diagram showing the configuration of an online certification mark publication system according to an embodiment of the present invention; and
FIGS. 7 and 8 are views illustrating the guide pages of certification marks.

### Mode for Invention

Details for the practice of the present invention will be described with reference to the accompanying drawings below.

Furthermore, in the following description of the present invention, the same reference symbols will be assigned to the same portions, and redundant descriptions thereof will be omitted.

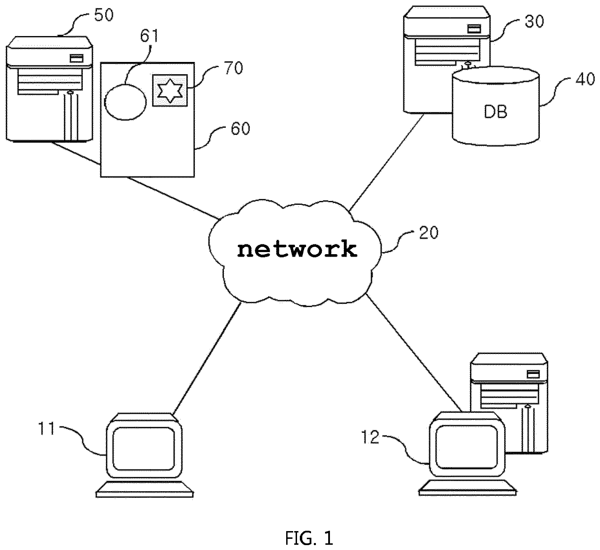

First, an example of the configuration of an overall system for the practice of the present invention will be described with reference to FIG. 1.

As shown in FIG. 1, the overall system for the practice of the present invention includes: a publisher terminal 11 configured to publish a certification mark as well as an online object on an online page; an issuance server 12 configured to issue a certification mark; a publication server 50 configured to provide an online page 60, such as a webpage or the like, online; and a management server 30 configured to manage a certification mark. Furthermore, a certification mark module 70 as well as the content 61 of an object is published on the online page 60. The terminal 11 and the servers 12, 30 and 50 are connected over a network 20. Furthermore, a database 40 configured to store required data may be further included.

The publisher terminal 11 is a common computing terminal, such as a PC, a notebook, a netbook, a smartphone, a tablet PC, a mobile, or the like, which is used by a publisher. The publisher terminal 11 subscribes to the management server 30 for membership, and registers and manages an object and a certification mark for the corresponding object.

Furthermore, the publisher terminal 11 connects to the publication server 50, publishes the content 61 of an object on the online page 60, and publishes a certification mark by inserting the certification mark module 70 of the corresponding object into the corresponding online page 60.

Alternatively, the publisher terminal 11 publishes and inserts the content 61 of the object and the certification mark module 70 on and into the publication server 50 without registering or managing its own certification mark. In this case, the publisher is a third party who is neither the issuer of the certification mark nor an object to which the certification mark is assigned. In other words, the publisher terminal 11 is the terminal of a person to whom the certification mark is issued or the terminal of the third party.

In the following description, a job performed by the publisher refers to a job performed via the publisher terminal 11. Furthermore, reference symbol 11 is assigned to the publisher as well as the publisher terminal.

Meanwhile, in this case, the object refers to a target to which a certification mark can be issued, such as a publisher himself or herself, his or her company, his or her product, his or her service, or the like.

Furthermore, the online page 60 is a page which enables content to be published online, and refers to a webpage, a social network system (SNS), a blog, a messenger, a mail, or the like which enables content to be published online.

Next, the issuance server 12 refers to a server or terminal which issues a certification mark to an object. The issuance server 12 registers with the management server 30 for membership, and transmits detailed information about the certification mark, issued by it, to the management server 30. In particular, when the content of the certification mark is changed because an image of the certification mark is changed, a validity period has been terminated, or the like, the issuance server 12 updates the corresponding data by transmitting information about the change to the management server 30.

Furthermore, inversely, when the management server 30 actively requests information about the certification mark, the issuance server 12 transmits information about the corresponding certification mark. Alternatively, the issuance server 12 may disclose the content of the certification mark, and the management server 30 may connect to the issuance server 12 and take the corresponding certification mark and the content of the corresponding certification mark. The management server 30 connects to the issuance server 12 at predetermined time intervals, and fetches update information. In this case, the issuance server 12 may not connect to or register with the management server 30.

Furthermore, the publication server 50 is a server which publishes an online page, and refers to a server which provides a service adapted to publish content online, such as a web server, an SNS server, a blog server, a mail server, or the like. Furthermore, the publication server 50 may be a server adapted to provide an online page, published on a mobile app, in conjunction with the mobile app.

Accordingly, the online page 60 is an online page displayed by the publication server 50, and refers to a page which may be published and displayed on the Internet or a mobile network.

Furthermore, the management server 30 accepts a membership registration from a publisher, and also accepts the registration of an object, i.e., a certification target, and a certification mark issued to the corresponding object from the publisher. Furthermore, the management server 30 receives detailed information about the certification mark directly from the publisher, or collects or receives the corresponding information from the issuance server 12 which issues the certification mark.

Furthermore, the management server 30 generates and provides the certification mark module 70 which will be inserted into and published on the online page 60.

The certification mark module 70 is a module including an image, a link, a script, and/or like adapted to be inserted into the online page 60, and is also a module configured to display a certification mark or provide detailed information about a certification mark. Furthermore, the certification mark module 70 displays or provides required information in response to a user's touch, click or the like, and also requests and receives required data from the management server 30.

The certification mark module 70 is a module which is configured in page form and which includes a link, a script, and/or the like so that the certification mark module 70 can be easily inserted into the online page 60. Accordingly, the publisher terminal 11 may download the certification mark module 70, and may insert the downloaded certification mark module 70 into the online page 60, thereby publishing the certification mark module 70 on the online page 60.

The database 40 is common storage media adapted to store data required for the management server 30, and stores membership information, a certification mark, detailed data regarding the certification mark, an object, etc.

More specifically, the database 40 includes: a membership DB 41 configured to store membership data; a certification mark DB 42 configured to store certification marks, a structure between the certification marks, the detailed content of the certification marks, etc.; and an object DB 43 configured to data about objects, i.e., certification targets. However, the above configuration of the database 40 is merely a preferred embodiment. When a specific apparatus is developed, the database 40 may be configured in a different structure based on a database construction theory by considering the ease of access and retrieval, efficiency, and/or the like.

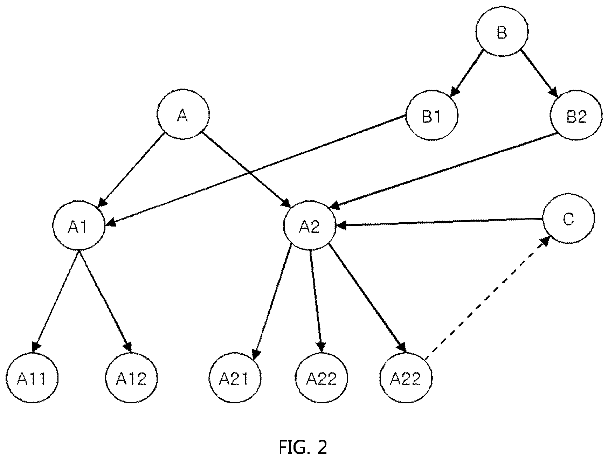

Next, the structure of an object, i.e., a certification target, and the inheritance of a certification mark according to an embodiment of the present invention will be described with reference to FIG. 2.

As shown in FIG. 2, objects, i.e., certification targets, may have a hierarchy. In FIG. 2, arrows indicate the hierarchy. In this case, a graph of objects drawn according to the hierarchy needs to satisfy the condition of a directed graph. In other words, the graph of objects is constructed based on the hierarchy between objects, and needs to have directionality in a single direction.

For example, when hierarchy is constructed in the direction of the dotted line arrow from object A22 to object C in FIG. 2, a cyclic relationship is established in the form of C -> A2 -> A22 -> C. A graph which forms such a cyclic relationship is not a directed graph. In other words, a graph based on the hierarchy between objects is a directed graph which does not have a cyclic relationship but has single directionality.

When objects have the hierarchy therebetween, a lower object (or a child object) inherits the certification mark of a higher object (or a parent object). In other words, each object in the hierarchy inherits the certification mark of its higher object, and also inherits a certification mark which has been inherited by the higher object.

For example, object A11 has objects A1, A, B1 and B as its higher objects. Accordingly, object A11 may inherit the certification marks of those higher objects. Furthermore, object A22 inherit certification marks from objects A2, B2, B, and C.

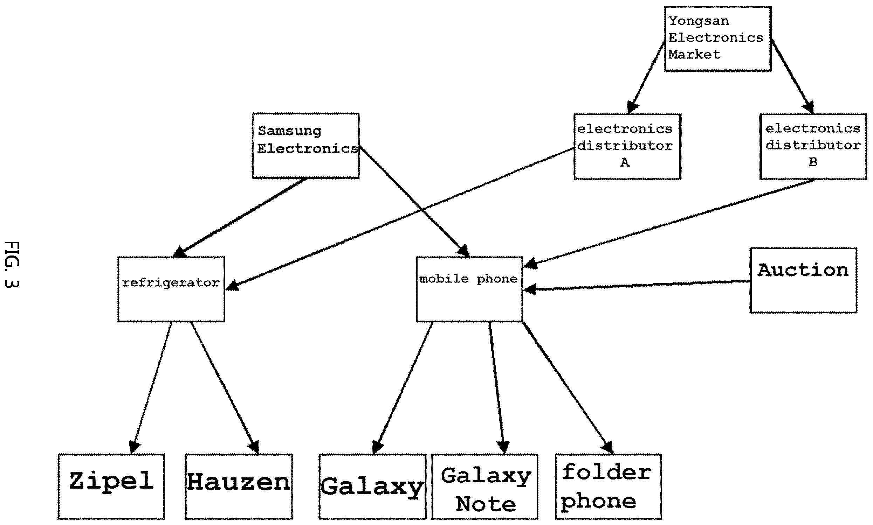

Referring to the example of FIG. 3, Samsung Electronics Co., Ltd. manufactures refrigerators and mobile phones, and electronics distributor A and electronics distributor B of Yongsan Electronics Market distribute the products in Auction Online Market. It is assumed that the mobile phone division of Samsung Electronics Co., Ltd. has obtained quality management certification, electronics distributor B has obtained best customer satisfaction certification, and Auction Online Market has obtained service grand prix certification. In this case, a Galaxy Note inherits a total of three certification marks, i.e., the quality management certification mark of the mobile phone of Samsung Electronics Co., Ltd., the best customer satisfaction certification mark of electronics distributor B, and the service grand prix certification mark of Auction Online Market.

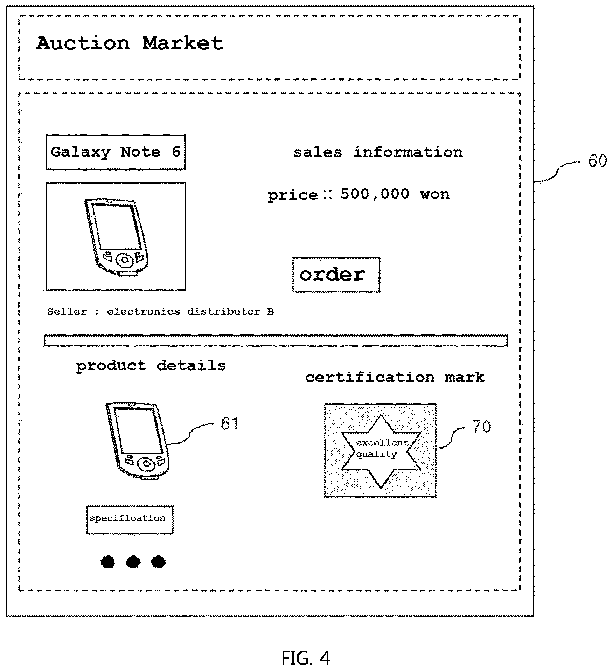

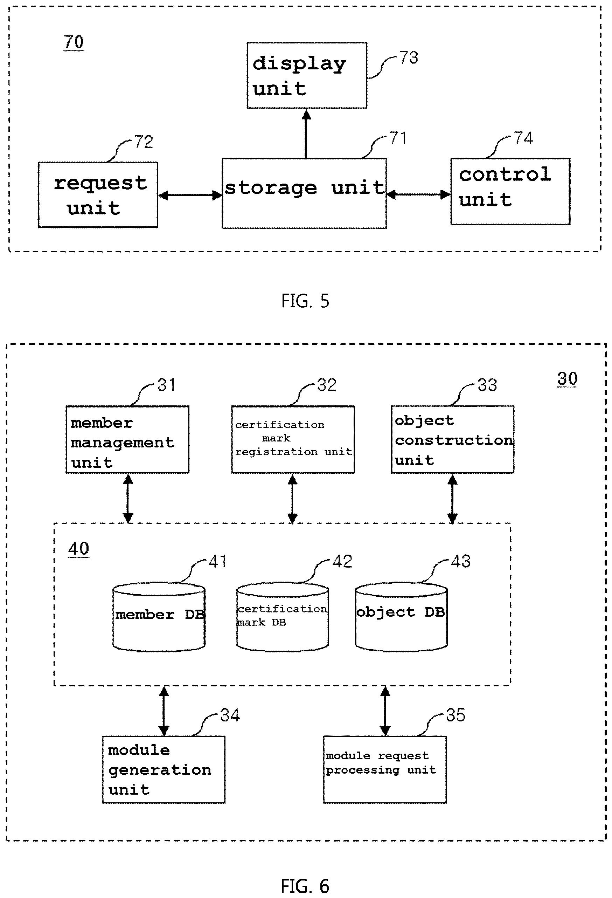

Next, the configuration of the certification mark module 70 according to an embodiment of the present invention will be described in greater detail with reference to FIGS. 4 and 5.

The certification mark module 70 is a module written in a language which will be displayed on the online page 60. In other words, the certification mark module 70 is a module written in a language which is used to form an online page, such as a webpage, a social network system (SNS), a blog, a messenger, a mail, or the like. Preferably, the certification mark module 70 is a web format module or mobile application module.

More preferably, the certification mark module 70 is a page format module written in HTML format, HTML 5.0 or the like, and is a page format module composed of text, a link, a script, and/or the like. Alternatively, the certification mark module 70 may be implemented as a program module which runs on a mobile app or the like.

In particular, the certification mark module 70 is written to perform specific functions in a programming language, such as Script, or the like. The functions which will be described below are functions which are written in a page writing language, such as Script, or the like, and are performed.

Furthermore, as shown in FIG. 4, the certification mark module 70 is inserted into the online page 60, is allocated a predetermined size display space of the online page 60, and displays the content of a certification mark, an image, text or the like of a certification mark, the information of a certification mark, object information, or the like on the corresponding display space. In other words, the content of a certification mark may be displayed in the form of an image, text, or the like.

Basically, this uses a method, such as an advertisement or blog plug-in method. In other words, in the case of a webpage, the module is inserted using a script language, such as Java Script, jQuery, ajax, or the like, and communication with the server is performed and data is transmitted and received in the format of html, XML, json, or the like by using an open API technology, such as Representational State Transfer (REST). Connection and control may be performed via an API key issued in advance.

Furthermore, as shown in FIG. 5, the certification mark module 70 according to the present invention includes: a storage unit 71 configured to store the address of the management server 30 and an object ID; a request unit 72 configured to request and receive information about the certification mark of an object from the management server 30; a display unit 73 configured to display the object or the information about the certification mark; and a control unit 74 configured to perform a designated function, such as display, linkage, or the like, in compliance with an input command.

The storage unit 71 performs storage in the form of the text of the certification mark module 70, or stores the address of the management server, an object ID, a name, etc. in a storage space or the like.

Furthermore, the request unit 72 connects to the management server 30 by reference to the stored address of the management server 30. Furthermore, the request unit 72 transmits the ID of the corresponding object or the object ID stored in the storage unit 71 to the management server 30. Furthermore, the request unit 72 receives information about the certification mark from the management server 30.

The display unit 73 displays the received information about the certification mark on the display space screen of the online page 60. In this case, when a plurality of certification marks is received, the contents or images of the certification marks may be sequentially displayed, or may be displayed on a segmented screen. In the case of a dynamic image, the display unit 73 may construct the dynamic image, or may receive the corresponding dynamic image directly from the management server 30. Alternatively, the display unit 73 may receive a plurality of certification mark images from the management server 30, and may dynamically and sequentially display the plurality of received images, such as content, etc.

Furthermore, the display unit 73 may continuously display information, such as the name or the like of an object, on part of an allocated display space, or may sequentially and alternately display the information and the certification mark image. In this case, the displayed information may further include information, such as the version, validity, network connection state, final update date, original publication location, and/or the like of the certification mark module itself.

When a user generates a predetermined event on the online page 60 through touching, clicking, or the like, the control unit 74 performs a designated function for the corresponding event. For example, when a user makes a click on a display space, movement to a webpage provided by the management server 40 may be performed, and a link to a page including a detailed description of the certification mark of a corresponding object may be made. Alternatively, when the cursor of a mouse is not clicked but entry into a corresponding display space is made, the operation of sequentially replacing a certification mark image with a subsequent image or the operation of enlarging a certification mark image is performed.

Furthermore, the control unit 74 may update information a predetermined period after the certification mark module has been executed, or information may be passively updated by a user.

Next, an online certification mark publication system according to an embodiment of the present invention will be described with reference to FIG. 6.

As shown in FIG. 6, the online certification mark publication system according to the present invention includes: a member management unit 31 configured to register and manage a member; a certification mark registration unit 32 configured to register a certification mark; an object construction unit 33 configured to construct an object, i.e., a certification target, by registering it; a module generation unit 34 configured to generate and download the certification mark module 70; and a module request processing unit 35 configured to receive a request from the certification mark module 70 inserted into an online page, and to respond to the request. Furthermore, the online certification mark publication system may further include a certification mark guide unit 36 configured to provide an online page adapted to provide a guide to a certification mark, an issuance organization, etc.

First, the member management unit 31 registers a member as a user, such as a publisher, or the like, receives membership information, and performs user certification for login.

Next, the certification mark registration unit 32 registers and stores a certification mark.

The certification mark is an official document or mark certifying the obtainment of certification, such as a certificate, a warrant, a license, a membership card, or the like, and may be displayed in one of various forms, such as a paper document form, an electronic document form, a mark form, a text form, etc. Although the certification mark of the present invention includes all types of marks which can be displayed online, it will be referred to as a certification mark for ease of description.

The certification mark registration unit 32 may receive detailed information about a certification mark via the publisher terminal 11. The certification mark may be registered by a publisher or a manager. In other words, the manager may search for the content of a certification mark or fetch related detailed information from a corresponding issuance organization, and may store the information in a database.

The detailed information about the certification mark includes the image, name, issuance organization (certification organization), validity period, certification content, certification number, and/or the like of the certification mark. Furthermore, the detailed information about the certification mark may further include detailed information about the issuance organization of the certification mark. For example, the credibility of a corresponding issuance organization, the details of certification received from another organization, or the like may be included. For example, the Therapist Association may issue a certification mark for the quality of products. When the corresponding Therapist Association has been certified by the Ministry of Health and Welfare, corresponding details may be registered as detailed information.

Furthermore, the certification mark registration unit 32 may receive a credibility evaluation value for the issuance organization of a corresponding certification mark from a manager, and may store the credibility evaluation value as detailed information.

Next, the object construction unit 33 accepts the registration of an object, i.e., a certification target, from the publisher terminal 11, and sets the relationships between registered objects.

The object is a certification target, and may be registered as a product or service, an individual, a company (organization), a group thereof, or the like. In this case, the object is assigned an identifier, such as an ID, a code, or the like.

A product is preferably identified by the model number (or product model) of the product. When a plurality of product models, such as similar products, related products, or the like, obtains the same certification mark, the corresponding product models are organized as a group. Such a group is generated and registered as a single object.

A service is identified by a service model, a unique code, a name, or the like. Like a plurality of products, when a plurality of services obtains a certification mark, the corresponding services may be organized as a group. Online content, such as a webtoon, a magazine, a newspaper, a drama, a movie, or the like, may be a single service.

An individual is identified by a name, a residence registration number, a unique ID, or the like. Individuals are not organized as a group. Instead, individuals are organized as an organization, a company, a department, or the like, form an object, such as an organization or the like, and are set to the generated object, such as an organization or the like, based on an affiliation relationship (or hierarchy). Individuals, such as a plurality of therapists, are made to belong to the organization object of the Therapist Association.

A company or organization is identified by a name, a unique ID, or the like. Companies or organizations are not organized as a group, but a plurality of companies or organizations are set as members of an umbrella company or organization. For example, when a plurality of companies is organized as Yongsan Electronics Market for a common purpose, the objects of companies within Yongsan Electronics Market are made to belong to the organization object of a Yongsan Electronics Market association.

As shown in FIG. 2 or 3, the relationship between objects are set to a hierarchy or inheritance relationship. In other words, when at least two objects have a relationship, one object is formed as a higher object, and the other is formed as a lower object. Furthermore, when objects A, B and C have successive hierarchy, object C and object A have hierarchy, and thus object A is a higher object of object C.

As described above, the relationship between the objects is formed according to a directed graph method, and thus the relationship between the objects has single directionality and a direction is not cyclic.

For example, the relationships between a product and a manufacturer, a product and a sales company, a service and a service company, an individual and an organization, a service and an individual, a product and an online market, a sales company and an online market, etc. may be set to the relationships between lower and higher objects.

Furthermore, when products, services, or the like are set to a group, as described above, the group is generated as a single object, and the hierarchy between the group and the products or services belonging to the group is determined based on their affiliation relationship. In other words, the group is a higher object, and the products or services belonging to the group is a lower object.

Furthermore, the object construction unit 33 receives objects and the relationships between the objects from the publisher terminals 11, sets detailed information about and the relationships between the objects, and stores the information in the database 40.

When the objects and the relationships between the objects are displayed in the form of a graph, a structure, such as a directed graph, is obtained. As described above, the entirety of a plurality of objects and relationships between the plurality of objects is referred to as an object configuration or object configuration structure.

The overall object configuration (configuration structure) may be constructed for each member, or may be constructed to be used by all members or some members in common. For example, when the configuration of objects related to the manufacturer of electronic products, such as mobile phones or the like, is provided, mobile phone companies may use the overall object configuration (configuration structure) of mobile phones or the like without change.

Furthermore, the object construction unit 33 provides the function of searching for an object. When the configuration of objects already constructed is used, the function of searching for an object is used in order to identify an object.

Furthermore, the object construction unit 33 receives and stores detailed information about an object, such as a name, a function, a field, and/or the like, and the stored detailed information may be used for search purposes.

Furthermore, the object construction unit 33 sets a certification mark assigned to a corresponding object. The certification mark which is set is a certification mark registered by the certification mark registration unit 32. More specifically, the object construction unit 33 connects a single object of an object configuration to the certification mark.

For example, a Green Mark, i.e., a certification mark, may be assigned to a plurality of environment-friendly product objects. Accordingly, objects, i.e., a plurality of environment-friendly products, may be connected (referred) to the single certification mark "Green Mark," or the certification mark thereof is set to a Green Mark. In other words, when a Green Mark is assigned to humidifiers of a specific model, a Green Mark is set as a certification mark for the humidifiers of the corresponding model, or the humidifiers of the corresponding model are connected to the Green Mark.

In this case, the certification mark is connected (set) only when it is assigned directly to a corresponding object. For example, when electronics distributor A obtains the certification of quality management IS02000, this certification mark is assigned directly to the company of electronics distributor A. However, the quality management certification mark is not assigned directly to mobile phones distributed by electronics distributor A. Accordingly, the quality management certification mark is assigned to and set for only the object of electronics distributor A, but is not assigned to and set for the mobile phones distributed by electronics distributor A.

Next, the module generation unit 34 generates a module configured to display a certification mark assigned to a specific object by inserting the certification mark into an online page.

As described above, the certification mark module 70 is a module written in a language which will be displayed on the online page 60. In other words, the certification mark module 70 is a module written in a language which is used to form an online page, such as a webpage, a social network system (SNS), a blog, a messenger, a mail, or the like.

Accordingly, the publisher terminal 11 may publish the certification mark module 70 on the online page 60 by downloading the certification mark module 70 from the module generation unit 34 and inserting the downloaded certification mark module 70 into the online page 60.

The certification mark module 70 is separately generated for each object. In other words, the single certification mark module 70 is generated for a single object. For example, a Green Mark certification mark may be assigned to all environment-friendly product objects. When a Green Mark is assigned to humidifiers of a specific model, a single unique certification mark module 70 is separately generated as a certification mark for the humidifiers of the corresponding model.

The certification mark module 70 includes: an object, i.e., a certification target, or an object ID; object information about the details (name, model name, and/or the like) of the object; and the reference information of a certification mark, such as the address, link information, or the like of the management server 30 or an object configuration structure.

The certification mark module 70 retrieves the certification mark related to the corresponding object by using the reference information of the certification mark. In other words, the certification mark module 70 connects to the management server 30, transmits an object ID, and retrieves the certification mark information of the corresponding object by requesting it from the management server 30. In this case, the management server 30 retrieves a certification mark inherited from a higher object as well as the certification mark directly assigned to the corresponding object.

The certification mark information fetched from the management server 30 includes an image, certification content, description and the like of the certification mark. The image of the certification mark is an image which can be displayed on the online page 60, and may correspond to a static image or dynamic image. Furthermore, the certification content includes the name, certification details, validity period, and/or the like of the certification mark. Furthermore, a description of the certification mark may be further included.

Furthermore, the certification mark module 70 displays the fetched certification mark information and the information about the corresponding object on the online page 60. In this case, when the certification marks are plural in number, the certification mark module 70 may sequentially display the plurality of certification marks via a dynamic screen, or may display the certification marks via a segmented screen.

Furthermore, the certification mark module 70 additionally displays object identification information, such as the name and/or the like of the object on the screen. The reason for this is to enable a user to directly check whether a certification mark in question is a certification mark for the corresponding object. For example, product A may be published on the online page 60, and the certification mark module 70 for product B may be inserted. In this case, a user may verify the certification mark for the object published on the online page by directly examining a product name, a model, and/or the like, displayed by the certification mark module 70 on the online page 60, with his or her own eyes.

Next, the module request processing unit 35 receives a request from the certification mark module 70 inserted into the online page 60, and transmits data about the corresponding request. In this case, an object for which the request is intended is identified by receiving the ID of the object.

In particular, in response to the certification mark request, the module request processing unit 35 transmits a certification mark assigned to the corresponding object and information about certification marks which can be inherited by the object to the certification mark module 70. Preferably, the module request processing unit 35 transmits certification mark information, including an image, certification content, certification mark, description and/or the like of the certification mark, to the certification mark module 70.

In this case, when certification marks corresponding to the object are plural in number, the module request processing unit 35 may transmit images of the certification marks by generating a dynamic image via which a plurality of images is sequentially displayed.

Next, the certification mark guide unit 36 provides the online page 60 which describes the certification mark in detail. Preferably, the online page 60 is constructed inside the management server 30, or is constructed by a content server, such as a web server operating in conjunction with the management server 30, or the like.

The online page 60 which provides the details of the certification mark refers to a page which provides text-oriented content in a webpage, a social network system (SNS), a blog, a mobile app, or the like. The online page 60 which provides a guide to the certification mark is published by the manager of the management server 30.

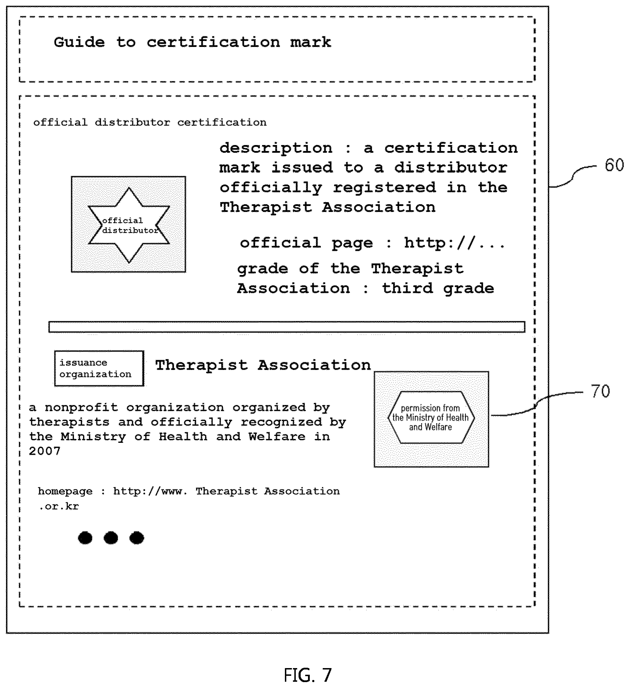

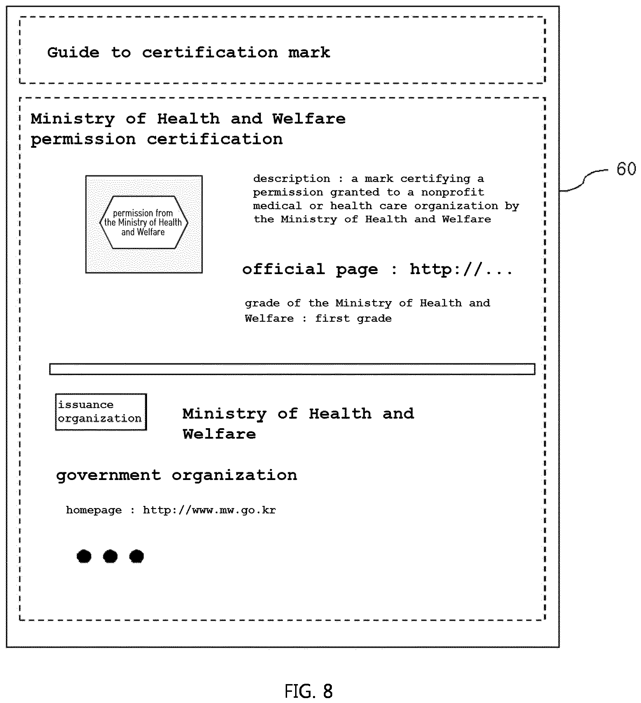

FIGS. 7 and 8 are views illustrating the guide pages of certification marks.

FIG. 7 shows a certification mark by which the Physical Therapist Association (hereinafter referred to as the Therapist Association) officially certifies a distributor which sells physical therapy-related products, such as functional pillows. FIG. 7 shows an image and description of the certification mark for the official distributor. Furthermore, when there is an official page of the certification mark, a link to the page is displayed, and thus direct movement to the corresponding page is provided.

Furthermore, the manager or management server 30 may assign a grade to the certification mark, and may publish the corresponding grade. In this case, preferably, the grade is a grade which is determined by considering the credibility of the certification mark, the authority of an issuance organization, or the like.

Furthermore, the issuance organization which has issued the corresponding certification mark and a description of the issuance organization are additionally published. A link to the description of the issuance organization, the homepage of the issuance organization, or the like may be provided.

As shown in FIG. 7, when the issuance organization has obtained a certification mark, the corresponding certification mark may be inserted using the certification mark module 70. In other words, since a space which provides a guide to the certification mark is also the online page 60, the certification mark module 70 may be inserted and published.

In FIG. 7, the Therapists Association, i.e., an issuance organization, has obtained permission certification from the Ministry of Health and Welfare, the certification mark module 70 for the permission certification of the Ministry of Health and Welfare may be inserted and published. Furthermore, movement to a certification guide page for the permission certification of the Ministry of Health and Welfare may be performed by clicking on the certification mark module 70. The online page 60 for the permission certification mark of the Ministry of Health and Welfare is shown in FIG. 8.

Meanwhile, the certification mark module 70 for each certification mark may be directly inserted into and published on the homepage of each issuance organization, or the like. In other words, in order to prove that the Therapist Association has been officially certified by the Ministry of Health and Welfare, the Therapist Association may insert and publish the certification mark module 70 for the permission certification of the Ministry of Health and Welfare into and on the homepage thereof. Since the homepage, mobile app page or the like of the Therapist Association is the single online page 60, all the certification marks obtained by the Therapist Association may be published using the certification mark module 70.

Accordingly, via the guide page of the certification mark, a user may directly visit the homepage of the corresponding issuance organization and/or the like, and may check a certification mark obtained by the corresponding issuance organization. Therefore, the user may conveniently check the credibility of the certification mark, the authority of the issuance organization, etc.

Although the invention contrived by the present inventor has been described in detail based on the embodiments, the present invention is not limited to the embodiments, but various modifications may be made without departing from the gist of the present invention.

## Claims

1. An online certification mark publication system, the online certification mark publication system connecting to a publisher terminal over a network, the online certification mark publication system comprising:
a certification mark registration unit configured to register and store a certification mark;
an object construction unit configured to accept a registration of an object from the publisher terminal, to also accept a registration of a certification mark assigned to the registered object, and to set hierarchy between registered objects;
a module generation unit configured to generate a certification mark module which can be inserted into an online page on which the object is published, wherein the certification mark module displays the certification mark, assigned to the published object, within the online page; and
a module request processing unit configured to, when a request for a certification mark is received from the certification mark module inserted into the online page, transmit the certification mark of the published object and information about an inheritable certification mark in response to the request, wherein the certification mark is inherited based on the hierarchy between the objects.

2. The online certification mark publication system of claim 1, wherein relationships between all the objects for which the hierarchy is set are configured to have directionality in a single direction.

3. The online certification mark publication system of claim 1, wherein each of the objects for which the hierarchy is set inherits a certification mark from a higher object thereof, and also inherits a certification mark inherited by the higher object.

4. The online certification mark publication system of claim 1, wherein the certification mark module is inserted into the online page, a predetermined size display space of the online page is allocated, and details of the certification mark are displayed on the corresponding display space.

5. The online certification mark publication system of claim 1, wherein when a plurality of certification marks is received in response to the request, the certification mark module sequentially displays details of the plurality of certification mark on the online page.

6. The online certification mark publication system of claim 1, wherein the certification mark module displays the object published on the online page and information about a higher object of the published object, as well as details of the certification mark.

7. The online certification mark publication system of claim 1, further comprising a certification mark guide unit configured to provide an online page which provides a description of the certification mark;
wherein the certification mark module provides a link from the online page on which it is published to the online page which is provided by the certification mark guide unit.

8. The online certification mark publication system of claim 7, wherein the certification mark guide unit publishes the description of the certification mark and a description of an issuance organization issuing the corresponding certification mark, and performs the publication by inserting a certification mark module for a certification mark assigned to the issuance organization.

9. The online certification mark publication system of any one of claims 1 to 8, wherein the object is a target to which certification is assigned, and includes any one or more of a product, a service, an individual, a company, an organization, and a group thereof.

10. The online certification mark publication system of claim 1 or 2, wherein the online page is any one or more of a webpage, a social network system (SNS), a blog, a messenger, a mail, and a mobile app page.
